(19) Europäisches Patentamt
European Patent Office
Office européen des brevets

(11) **EP 1 304 545 A1**

(12) **EUROPEAN PATENT APPLICATION**

(43) Date of publication:
**23.04.2003 Bulletin 2003/17**

(51) Int Cl.[7]: **G01C 19/00**, G09B 23/10, F03G 3/08

(21) Application number: **01124270.8**

(22) Date of filing: **17.10.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **P.V. Hitech Co., Ltd.**
**Samseannai Sub-District, Phayathai District, Bangkok (TH)**

(72) Inventor: **Shipov, Gennady**
**Moscow (RU)**

(74) Representative: **Sunderland, James Harry et al**
**HASELTINE LAKE PARTNERS**
**Motorama Haus 502**
**Rosenheimer Strasse 30**
**81669 München (DE)**

(54) **Four dimensional gyroscope**

(57) The device is a four-dimensional gyroscope, demonstrating the connection between the translational and the rotational inertia, which leads to the violation of the Momentum Conservation Law of the center of masses during its absolute elastic collision with the wall. For the proof of the violation of one of the basic Laws of Classic Mechanics the device is equipped with the scientific-research complex, that allows to observe double, triple, etc collisions of the four-dimensional gyroscope, as well as to perform comparison of the theoretical calculations with the experimental data.

FIG.1

**Description**

**BACKGROUND OF THE INVENTION**

**1.Field of the invention.**

Herewith it is stated the invention of the device, which demonstrates the violation of the momentum conservation law of the center of masses of the Mechanical system. This violation is happening due to the existing connection inside the device between the translational and rotational inertia. In four dimensional space of the theory of special relativity the translational acceleration is viewed as rotation in space-time planes, that is why the invented device was named as "four-dimensional gyroscope".

**2.Description of the Prior Art.**

The classical mechanics knows two types of the inertia of the object: **translational inertia** of Galileo-Newton's, the analytical expression of which is the first law of Newton's mechanics $m\bar{a} = 0$ (where $m$ - mass and $\bar{a}$ - acceleration of the object) and the **rotational inertia** of Newton -Euler's the analytical expression of which is the first law of Newton -Euler's mechanics $J\bar{\omega} = 0$ (where $J$ - moment of inertia and $\bar{\omega}$ - angular velocity of the rotation of the object). In the classical mechanics it was accepted that these two types of inertia are exist additively and have no connection between them. The present invention provides four-dimensional gyroscope, which establishes such connection both in the theory and in the experiments.

The phenomenon of the inertia in mechanics is one of the most complex and not sufficiently researched problems-Experimentally in the accelerated frames we observe four types of inertia forces:

- The centrifugal force $\bar{F}_1 = -m[\bar{\omega}[\bar{\omega}\bar{r}]]$,
- The Coriolis force, $\bar{F}_2 = -2m[\bar{\omega}\bar{v}]$,
- Inertia force, concerned whit rotational acceleration $\bar{F}_3 = -m[\bar{\dot{\omega}}\bar{r}]$;
- as well as translational inertia force $\bar{F}_4 = -m\bar{W}$.

The first 3 forces are caused by the rotation of the object at 3 space angles, because they depend upon the vector of the angular velocity of the rotation $\bar{\omega}$. If we rely on the concept of the special theory of relativity, then the fourth inertia force is created by the rotation as well - the rotation in the three pseudo-euclidean angles. For example, if the object moves with the acceleration along the axis x, then its acceleration is defined through the pseudo-euclidean angle $\vartheta$ in the $ct$ - $x$ plane according to the formula $W = v = cd(tg\vartheta)/dt$.

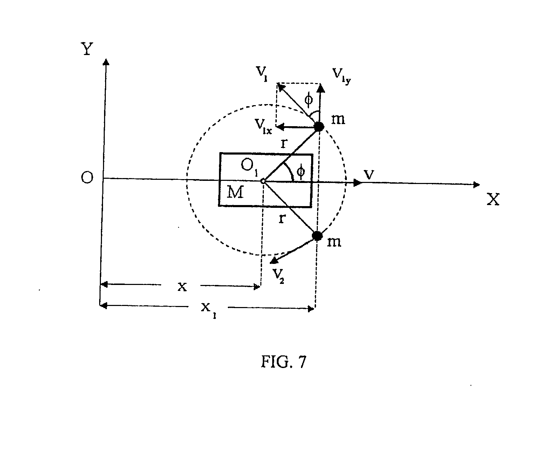

Such concept of the inertia forces allows creating a four-dimensional gyroscope, which rotates not only at the space angles but also at the space-time ones. The principle scheme of the simplest four-dimensional gyroscope is shown below on the FIG. 7

The base of the device is the mass $M$ in the center of which there is an axis $O_1$. At the distance $r$ two small masses $m$ are synchronously rotating in the different directions around the axis. In the present model these masses are rotating at the different heights in order to avoid a collision between them. If we start to rotate masses $m$, the central mass $M$ will begin to oscillate with the fixed amplitude around the common center of masses. As a result we have got the simplest type of four-dimensional gyroscope with the rotation at one-dimensional angle $\phi$ (rotation of masses $m$) and the rotation at one space-time angle $\vartheta$ (translational acceleration of masses $M$ along axis x). The theoretical description of the proposed four-dimensional gyroscope is based on its translational

$$(M + 2m)v_c = (M + 2m)v - 2mr\omega \sin \phi - 2mr\omega^2 \cos\phi = 0$$

and rotational

$$J\omega - Jk\frac{2\sin\phi \cdot \cos\phi}{1-k^2 \cdot \sin^2\phi} \cdot \omega^2 = 0, \quad J = 2mr^2$$

equations of motion, where $v_c$ - velocity of the center of the mass of the gyroscope, $v$ - velocity of mass $M$, $\omega = \phi$ - angular velocity of the rotation of masses $m$.

The solution of the translational equation proves that the center of the masses of the system is at rest or in uniform motion due to laboratory reference frame.

The four-dimensional gyroscope has got five energies:

**1.** Translational energy $E = (M + 2m)v^2/2$ ;

**2.** Rotational energy $W = J\omega^2/2$;

**3.** The energy of the interaction between translational and rotational inertia $H = -2mrv\omega \cdot \sin\phi$;

**4.** Total energy $T = E + W + H = const$ and

**5.** Energy of the center of the masses $E_c = (M + 2m)v^2_c / 2 = const$, which does not coincide with the total energy.

Besides it has got four momentum acting along its axis x:

1. Translational momentum $P = (M + 2m)v$ ;

2. Rotational momentum $L = -2mr\omega \cdot \sin \phi$ ;

3. Total momentum $C = P + L = const$ and

4. Momentum of the center of the masses $P_c = (M + 2m)v_c = const$, corresponding with the complete momentum of the system $C = P_c$.

During the elastic collision of the four-dimensional gyroscope with the wall the following Conservation Laws are taking place:

A. Total energy

$$T = E + W + H = E' + W' + H' = T' = const$$

B. Linear momentum

$$P = (M + 2m)v = (M + 2m)v' = P' = const.$$

Besides, during the time of the collision there is one condition takes place:

$$\phi = \phi'.$$

Here the hachures indicate the denotations of the values after the collision. Joint solution of three-equation system shows that the velocity of the center of the masses of the four-dimensional gyroscope changes after the collision in accordance with formula

$$v'_c = -v_c\left[1 - 2(k \cdot \sin \phi)^2\right] - 2B\omega \cdot \sin \phi\left[1 - (k \cdot \sin \phi)^2\right], \qquad (1)$$

where $B = 2mr/(M + 2m)$, $k^2 = B/r$. Simultaneously after the stroke the angular velocity of rotation is changing according to the formula

$$\omega' = \omega[1 - 2(k \cdot \sin\phi)^2] - 2 \cdot \sin\phi\frac{v_c}{r} \qquad (2)$$

The formulas (1) and (2) show that during the absolute elastic stroke the four-dimensional gyroscope is able to transform the inner rotational energy into the translational energy of the center of the masses and vice versa. That is why after the collision the four-dimensional gyroscope can continue its motion backwards towards the wall and perform the second, third, etc. collisions with the wall. The multiple bounces will be occurring until the time when the velocity of the center of the masses changes its direction into opposite one and the mass M departs from the wall to a distance bigger than $B$.

**SUMMARY OF THE INVENTION**

We claim the invention of the simplest type of four-dimensional gyroscope with the rotation at one space angle

$\phi$ ( rotation of masses $m$) as well as at one space-time angle $\vartheta = arctg(\nu/c)$, where $\nu$ - is the speed of the translational motion of mass $M$ with the fixed axis; and $c$- is the speed of light. During the absolute elastic collision with the wall, in our case measured by 0.001 sec, the device is demonstrating the violation of one of the basic laws of mechanics - momentum conservation law of center of masses. In order to prove experimentally the evidence of this statement, besides four-dimensional gyroscope there was organized the scientific research center, which allowed the following:

- To visually observe the double, triple, etc. absolutely elastic collisions of four-dimensional gyroscope with the wall;
- Before and after the collision to register automatically such kinematic characteristics of four-dimensional gyroscope as:

    1. Coordinate $x(t)$ mass $M$ ;
    **2.** Coordinate $x_c(t)$ of the center of masses;
    **3.** The rotation angle $\phi$.

- With the help of computer programs to calculate before and after the collision the following:

    1. Velocity $\nu(t)$ of mass $M$ ;

    **2.** Velocity $\nu_c(t)$ of the center of masses;

    **3.** Angular velocity $\omega(t)$;

    **4.** Acceleration $A(t)$ of mass $M$;

    **5.** Acceleration $A_c(t)$ of the center of masses;

    **6.** Angular acceleration $K(t)$.

- To prove the correctness of the formulas according to the obtained data.

**BRIEF DESCRIPTION OF THE DRAWINGS**

**DESCRIPTIONS OF THE PREFERED EMBODIMENTS**

The FIG.1 represents the general view of the four-dimensional gyroscope along the axis of symmetry, the colliding part, the measuring blocks and the supporting wheels.
The FIG.2 depicts the top view with the small masses $m$ allocated symmetrically along the axis of symmetry $x$.
Thee FIG.3 depicts the view from the beneath. with the adjustments for the wheels and registration equipment.
The FIG.4 adduces the drawing of the whole complex, registrating the kinematic characteristics of the four-dimensional gyroscope.
The FIG.5 the block-scheme for the research center of the absolute elastic collision of the four-dimensional gyroscope.
The FIG 6. the same view, but from the top.
Thee FIG.7 depicts the principle scheme of the four-dimensional gyroscope.

THE DESCRIPTION OF THE PREFERED EMBODIMENTS.

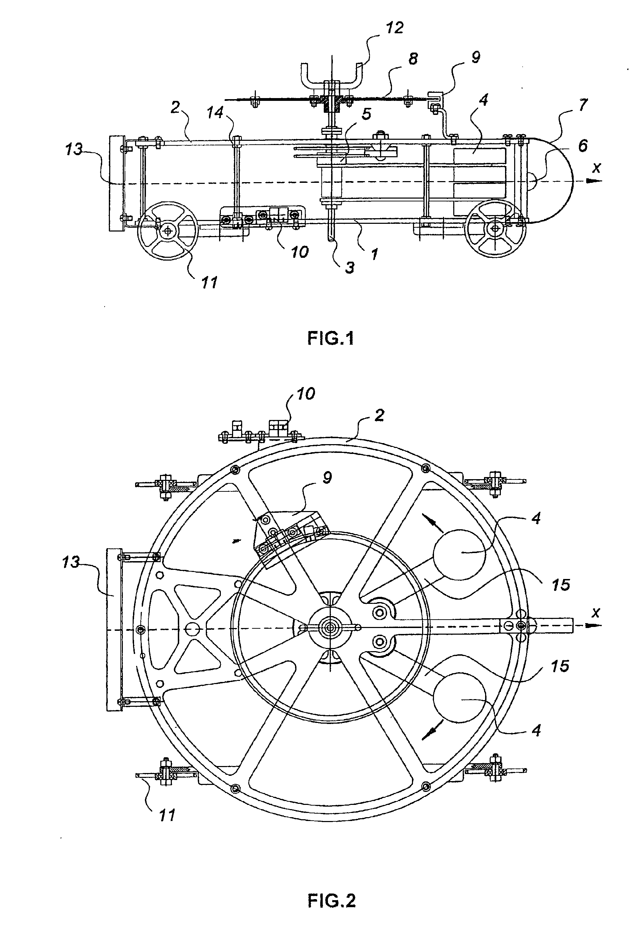

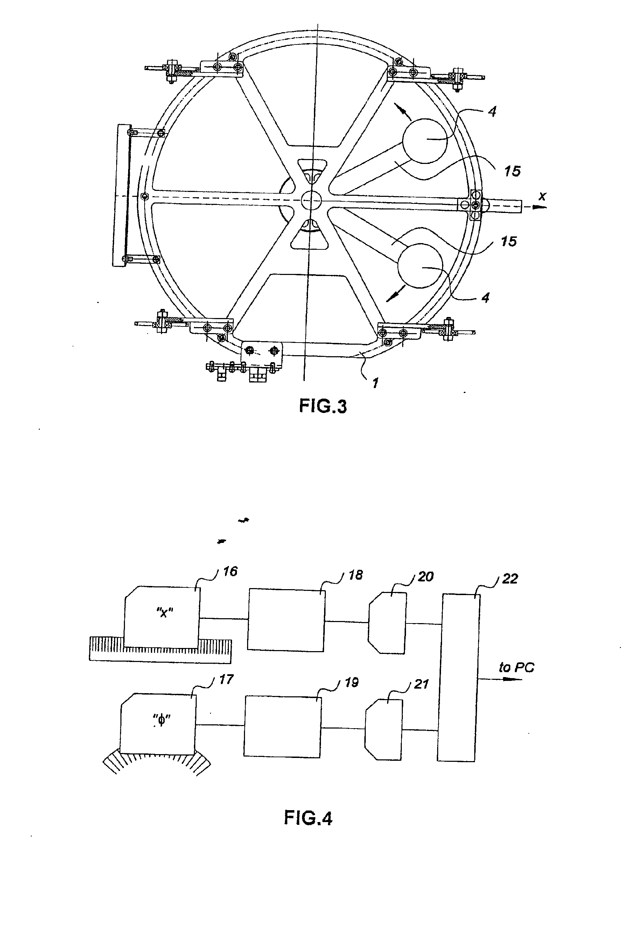

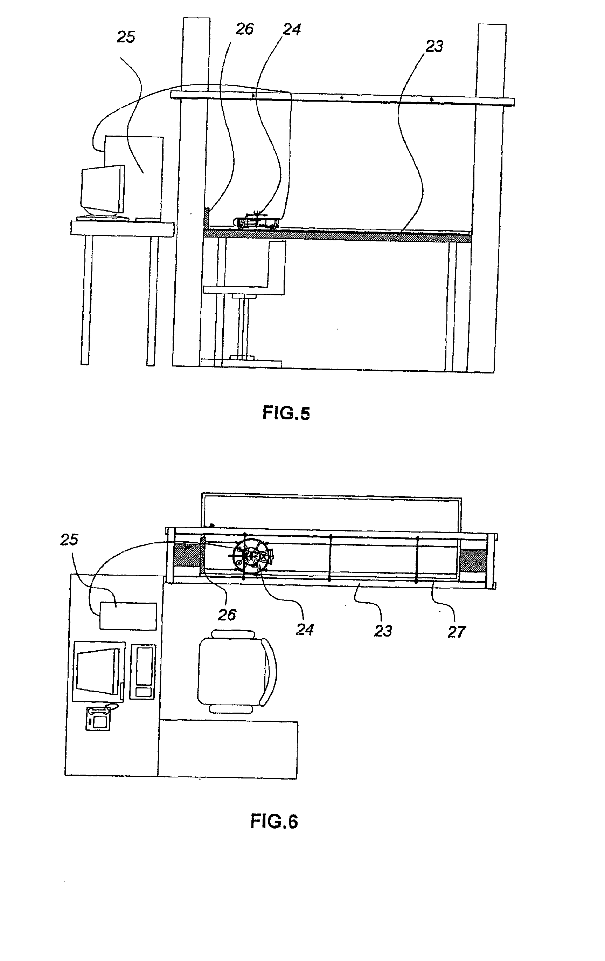

The FIG. **1** represents the general view of the four-dimensional gyroscope. The lower part **1** and the upper part **2** of the gyroscope body are made from aluminum and connected together with help of the steel studs **14**. The central shaft **3** has got the differential mechanism **5**, which synchronously rotates small masses **4** in the different directions. The technological handle **12** starts the rotation. As soon as small masses begin rotation, the device **24** moves forward with a certain speed towards metal wall **26** (FIG.**5** and **6**). The motion of gyroscope **24** (FIG.**5**, **6**) is investigated on the horizontal surface **23** (FIG.**5**), verified with precision. At the moment of the collision with the wall the spring stud **7**, secured by the hard stud **6,** bounces. During the motion of four-dimensional gyroscope before and after the collision the measurements of the angles $\phi$ of the rotation are registered with the help of the polar ruler **8** and photo-elements **9**. The notations of coordinate $x(t)$ are registered synchronously with the help of the photo-elements **10**. The data from the photo-elements transferred to the reformatting block **13** (FIG. **2**), schematically drafted on FIG **4**. The signals from the photo-elements **16** and **17** are sent to the amplifiers **18** and **19** (FIG. **4)** then to the Analog Digital Converters **20** and **21.** After ADC the signal, transformed into 0 and 1, is sent to the transmitter **22,** which the latter sends to the computer **25** (FIG. **5.6)** for further calculations. The software program allows monitoring the kinematic parameters of the four-dimensional gyroscope before and after the collision in real time.

**Claims**

1. The device for the demonstration the violation of the momentum conservation law of the center of masses during its absolute elastic collision with the wall consists of the following:

   A. Mass *M*, which is formed by the lower **1** and upper **2** parts of the body, the elements **3, 5, 6-13** as well as the body itself;
   B. Small masses **4**, rotating synchronously into different directions and creating the rotation inertia;
   C. Body *M,* which moves together with the rotating small masses **4** along the axis x and creating the translational inertia;
   D. The axis of rotation **3** of the small masses **4,** fixed on the body *M*, moving translational, which provides the connection between the translational and rotational inertia.

2. The device of claim **1** which says that with the motion of the parts of the device the rotational inertia is transformed into translational inertia and vice versa.

3. The device of claim 2 which says that when the external force is absent both translational and rotation inertia are balanced, so that the center of the whole system is at rest or moves linear and uniformly.

4. The device of claim **3** which says that the external force acting on the device along its axis *x* changes its translational inertia that violates the balance between the translational and rotation inertia, and the center of masses changes its velocity.

5. The device of claim **4** which says that when the external force stops its effect along the axis x, the rotational and translational inertia are redistributed inside the device until they balance each other, afterwards the center of masses begins to move with new constant velocity

6. The device of claim **5** which says that during the effect of the external force the new velocity of the center of the masses depends not only upon the value of the external effect, but also upon the angle of the disposition of the smaller masses relatively the axis *x* as well as upon the value of the angular velocity.

7. The device of claim **6** which says that during the absolute elastic collision of the device with the wall the velocity of the center of the masses changes not only its direction after the collision but also absolute value according to the formula (1)

8. The device of claim **7** which:

   A. Demonstrates the violation of the momentum conservation law of the center of the masses during the absolute elastic collision.
   B. Allows to produce the " inner impact", which changes the velocity of the center of the masses of the system without external effect, by changing the angular velocity of the rotation of the small masses inside the system.
   C. During the absolute elastic collision can perform the multiple collisions with the wall before the final bounce.

FIG.1

FIG.2

**FIG.3**

**FIG.4**

FIG.5

FIG.6

FIG. 7

**European Patent**

**Office**

## PARTIAL EUROPEAN SEARCH REPORT

**Application Number**

which under Rule 45 of the European Patent Convention
shall be considered, for the purposes of subsequent
proceedings, as the European search report

EP 01 12 4270

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GB 770 555 A (ANDREW REID) 20 March 1957 (1957-03-20) * the whole document * | | G01C19/00 G09B23/10 F03G3/08 |

TECHNICAL FIELDS
SEARCHED     (Int.Cl.7)

G01C
G09B
F03G

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 5 April 2002 | Hoekstra, F |

**European Patent Office**

**INCOMPLETE SEARCH
SHEET C**

Application Number

EP 01 12 4270

```
Claim(s) searched incompletely:
      1-8

Reason for the limitation of the search:

The application is concerned with a device for demonstrating the
violation of some of the laws of classical mechanics. However, the
description and the claims are unclear to such an extent that it is not
possible to carry out a meaningful search into the state of the art
relating to the claims, as neither the theory behind the device nor its
manner of working are explained. It is further not clear what kind of
action of the device would prove the alleged violation. Therefore, the
search has been limited to background art only concerning bodies moved by
inertial forces.
```

**ANNEX TO THE EUROPEAN SEARCH REPORT
ON EUROPEAN PATENT APPLICATION NO.** EP 01 12 4270

This annex lists the patent family membersrelating to the patent documents cited in the above-mentioned European search report.
The members are as contained in the European Patent Office EDP file on
The European Patent Office is in no way liable for these particulars which are merely given for the purpose of information.

05-04-2002

| Patent document cited in search report | Publication date | Patent family member(s) | Publication date |
|---|---|---|---|
| GB 770555 A | 20-03-1957 | NONE | |

For more details about this annex : see Official Journal of the European Patent Office, No. 12/82